(19) Europäisches Patentamt / European Patent Office / Office européen des brevets

(11) **EP 3 336 745 B1**

(12) **EUROPEAN PATENT SPECIFICATION**

(45) Date of publication and mention of the grant of the patent:
**24.08.2022 Bulletin 2022/34**

(21) Application number: **16204342.6**

(22) Date of filing: **15.12.2016**

(51) International Patent Classification (IPC):
**G06V 10/54** (2022.01)    **G06V 20/58** (2022.01)

(52) Cooperative Patent Classification (CPC):
**G06V 20/582; G06V 10/54; G06V 20/584**

(54) **DEVICE FOR DETERMINING THE PRESENCE OF A ROAD SIGN**

VORRICHTUNG ZUR BESTIMMUNG DES VORHANDENSEINS EINES STRASSENSCHILDS

PROCÉDÉ DE DÉTERMINATION DE LA PRÉSENCE D'UN PANNEAU DE SIGNALISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018 Bulletin 2018/25**

(73) Proprietor: **Continental Autonomous Mobility Germany GmbH**
**85057 Ingolstadt (DE)**

(72) Inventors:
• **Ponkumar, Senthil**
**560068 Bangalore (IN)**
• **Chakraborty, Ishita**
**712101 Chinsurah (IN)**
• **Ramachandran, Radhika**
**Ernakulam - 683574 (IN)**

(74) Representative: **Continental Corporation**
**c/o Continental Automotive GmbH**
**Intellectual Property**
**Nordostpark 30**
**90411 Nürnberg (DE)**

(56) References cited:
EP-A2- 2 573 711        US-A1- 2011 109 476
US-A1- 2016 049 076     US-B1- 9 092 695

• Mustain Billah ET AL: "Real Time Traffic Sign Detection and Recognition using Adaptive Neuro Fuzzy Inference System", Communications on Applied Electronics, 23 October 2015 (2015-10-23), pages 1-5, XP055373277, DOI: 10.5120/cae2015651877 Retrieved from the Internet: URL:http://citeseerx.ist.psu.edu/viewdoc/d ownload?doi=10.1.1.735.6640&rep=rep1&type= pdf&usg=AFQjCNGIKUHDMb4Tt6EFGmL0Z1zY ds2cKw [retrieved on 2017-05-06]
• BARO X ET AL: "Traffic Sign Recognition Using Evolutionary Adaboost Detection and Forest-ECOC Classification", IEEE TRANSACTIONS ON INTELLIGENT TRANSPORTATION SYSTEMS, IEEE, PISCATAWAY, NJ, USA, vol. 10, no. 1, 1 March 2009 (2009-03-01), pages 113-126, XP011347159, ISSN: 1524-9050, DOI: 10.1109/TITS.2008.2011702
• ROBERT M HARALICK ET AL: "Textural Features for Image Classification", IEEE TRANSACTIONS ON SYSTEMS, MAN AND CYBERNETICS, IEEE INC. NEW YORK, US, vol. 3, no. 6, 1 November 1973 (1973-11-01), pages 610-621, XP011192771, ISSN: 0018-9472, DOI: 10.1109/TSMC.1973.4309314

**Description**

FIELD OF THE INVENTION

The present invention relates to a device for determining the presence of a road sign, to a system for determining the presence of a road sign, to a method for determining the presence of a road sign, as well as to a computer program element.

BACKGROUND OF THE INVENTION

The general background of this invention is the field of driving warning and information provision systems.

EP2573711A2 describes a method and a device for detecting traffic signs in an input image camera. The method comprises a color space converting step of converting the input image into a HSV color space image; a filtering step of filtering, based on a predetermined pass range of a standard color of each of the traffic signs, the HSV color space image to obtain a filtered image, and then generating one or more connected domains based on one or more regions in the filtered image; a removing step of removing, based on a standard rule of the corresponding traffic sign, at least one of the generated connected domains, not being the corresponding traffic sign, and letting others of the generated connected domains be candidate traffic sign domains; and a recognition step of recognizing, based on a feature of each of the candidate traffic sign domains, the corresponding traffic sign.

Mustain Billah et al: "Real Time Traffic Sign Detection and Recognition using Adaptive Neuro Fuzzy Inference System", Communications on Applied Electronics, 23 October 2015, pages 1-5, describes that the authors have tried to find out the capability of adaptive neuro fuzzy inference system (ANFIS) for traffic sign recognition. Video and image processing was used to detect circular shaped signs and ANFIS was used for recognizing detected signs.

Drivers when driving may not see a road sign, such as a stop sign or no entry sign, because they are distracted or are otherwise concentrating on driving the vehicle. This can lead to a situation that can be dangerous, for example if the road sign was a stop sign or no entry sign.

There is a need to address this situation.

SUMMARY OF THE INVENTION

It would be advantageous to have improved apparatus for determining the presence of a road sign, and for distinguishing between road signs and light sources.

The object of the present invention is solved with the subject matter of the independent claims, wherein further embodiments are incorporated in the dependent claims. It should be noted that the following described aspects and examples of the invention apply also for the device for determining the presence of a road sign, the system for determining the presence of a road sign, the method for determining the presence of a road sign, and for the computer program element.

In a first aspect, there is provided a device for determining the presence of a road sign as defined in claim 1

The input unit is configured to provide the processing unit with at least one image, the at least one image relating to a scene external to a vehicle. The input unit is also configured to provide the processing unit with dictionary information, wherein the dictionary information is generated on the basis of a plurality of images, and wherein at least some of the image data of the plurality of images is image data associated with at least one road sign. The processing unit is configured to determine if a particular type of road sign is present in the at least one image on the basis of image processing of the at least one image and the dictionary information. The image processing comprises a determination of a distance and spatial relationship for at least one pixel value in the at least one image. The output unit is configured to output driving warning information if the particular type of road sign is determined to be present.

In this way, dictionary information containing information relating to imagery of road signs can be utilised along with image processing relating to how different combinations of pixel brightness values occur in an acquired image to improve the determination of whether a road sign is present in the acquired image. In other words, the distributions of co-occurring values in an image can be utilised along with dictionary information relating to road sign imagery, to enable the discrimination between non-road sign and road sign images in an acquired image.

In this manner, the device provides driving warning information that suffers from less confusions between road signs, such as no entry signs, and light sources within acquired imagery, and false positives are reduced.

To put this another way, a new filter is provided that enables imagery to be analysed to differentiate between road signs, and other image data such as that associated with light sources.

In an example, the at least one image provided from the input unit to the processing unit, is a plurality of images relating to the scene external to the vehicle, and by processing a plurality of images rather than just one a more confident output can be arrived at.

Determination of the distance and spatial relationship comprises utilisation of a Gray Level Co-Occurrence Matrix.

In this way, an efficient way of processing the imagery to extract features that can be utilised with dictionary information to determine the presence, or not, of a road sign is provided. To put this another way, the way of determining the presence of a road sign has been improved, including the ability to differentiate between road signs and differentiate between a road sign and a light source.

The determination if a particular sign is present comprises utilisation of a decision tree classifier.

In this way, an efficient predictive model can be utilised as part of the determination of whether a particular sign is present, that can continually account for improvements in the dictionary information and improvements in image processing. Thus, an adaptive process for determining if a particular sign is present is enabled.

The determination if a particular sign is present comprises utilisation of shape classification image processing algorithm.

In this manner, more accurate prediction of whether a particular sign is present is provided. This is because not only are the different combinations of pixel brightness values that occur in an acquired image determined, but this can be associated with a shape that is consistent with the external shape, or internal feature structure, of a road sign. In other words, a particular distance and spatial relationship for pixel values that occurs in a region of an image could be indicative of a particular road sign. If however, this distribution is found within a global shape that is not consistent with that road sign, then this can be used to reduce the confidence level that that road sign is present.

The shape classification image processing algorithm is configured to analyse the at least one image to determine if a shape corresponding to the shape of the particular type of road sign is present.

The determination if a particular sign is present comprises a determination of an intensity level of a luminance spread within a region of interest associated with the shape corresponding to the shape of the particular type of road sign.

In an example, dependent upon a result of the shape classification image processing algorithm the at least one image can be added to the plurality of images.

In this manner, the dictionary information can be continually improved as imagery is acquired.

At least some of the image data of the plurality of images is image data associated with at least one light source.

In other words, image data that has road signs and image data that has light sources, where a frequent problem encountered is that reflections from road signs can appear to be similar to light sources themselves leading to existing systems determining light sources to be road signs. However, by already knowing which data has road signs and which data has light sources - as ground truths - enables appropriate dictionary information to be compiled, from which the presence of a particular type of road sign in acquired image data can be determined on the basis of image processing of that image data along with the dictionary information.

In an example, generation of the dictionary information comprises utilisation of a Gray Level Co-Occurrence Matrix.

In this way, the pr ovision of dictionary information can match how the device is processing acquired imagery to determine distributions of co-occurring values in imagery.

In an example, generation of the dictionary information comprises utilisation of a decision tree classifier.

In this way, the provision of dictionary information can match how the device is processing acquired imagery and classifying that imagery, to match how the device is processing imagery in real time in order to improve the real time classification of acquired imagery, to determine if a particular type of road sign is present.

In an example, the particular type of sign comprises a stop sign. In an example, the particular type of sign comprises a no entry sign.

In other words, appropriate driving warning information can be provided if a driver is approaching a stop sign or a no entry sign. For example, if the driver is approaching the stop sign or no entry sign in a manner indicating that they may not have seen it, for example if a vehicle is not decelerating, then a warning can be provided to the driver that there is a stop sign (or no entry sign) ahead. The warning can be visible or audible.

In a second aspect, there is provided a vehicle as defined in claim 6.

The at least one image acquisition unit comprises a camera configured to acquire the at least one image. The device is configured to cooperate with the at least one vehicle operational system to control the at least one vehicular operational system.

In this manner, the at least one vehicular operational system can provide warning information to the driver. For example, a loudspeaker can made a warning noise, or provide a synthesized human voice to the driver to warn the driver. Also, a VDU can present the driver with warning information.

In a third aspect, there is provided a method for determining the presence of a road sign as defined in claim 7.

According to another aspect, there is provided a computer program element as defined in claim 8.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a device for determining the presence of a road sign
Fig. 2 shows a schematic set up of an example of a system for determining the presence of a road sign;
Fig. 3 shows a method for determining the presence of a road sign; and
Fig. 4 shows an example of a detailed workflow for determining the presence of a road sign.

DETAILED DESCRIPTION OF EMBODIMENTS

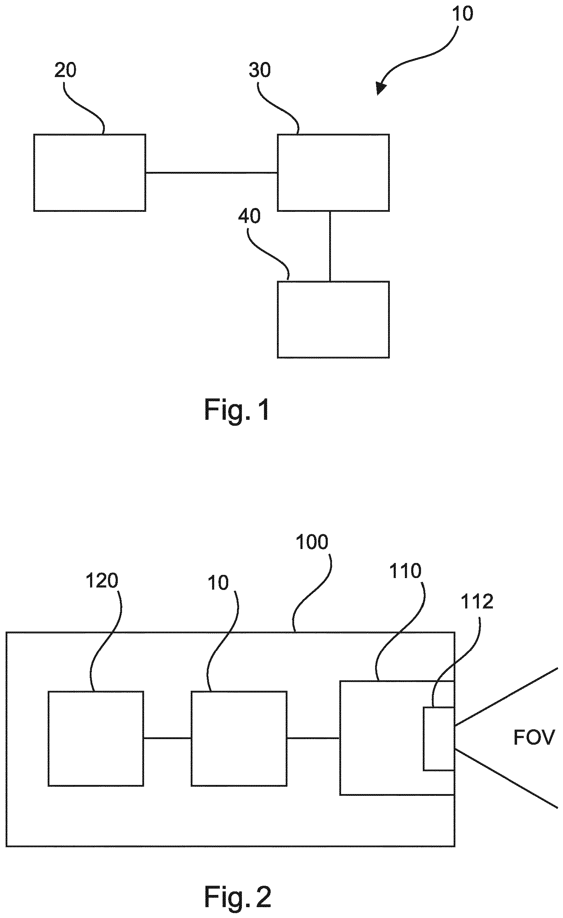

Fig. 1 shows an example of a device 10 for determining the presence of a road sign. The device 10 comprises an input unit 20, a processing unit 30, and an output unit 40. The input unit 20 is configured to provide the processing unit 30 with at least one image, the at least one image relating to a scene external to a vehicle. This is done via wired or wireless communication. The input unit 20 is also configured to provide the processing unit 30 with dictionary information again via wired or wireless communication. The dictionary information is generated on the basis of a plurality of images, and at least some of the image data of the plurality of images is image data associated with at least one road sign. The processing unit 30 is configured to determine if a particular type of road sign is present in the at least one image on the basis of image processing of the at least one image and the dictionary information. The image processing comprises a determination of a distance and spatial relationship for at least one pixel value in the at least one image. The output unit 40 is configured to output driving warning information if the particular type of road sign is determined to be present.

In an example, a plurality of images are provided from the input unit to the processing unit.

Determination of the distance and spatial relationship comprises utilisation of a Gray Level Co-Occurrence Matrix.

The determination if a particular sign is present comprises utilisation of a decision tree classifier.

The determination if a particular sign is present comprises utilisation of shape classification image processing algorithm.

Utilisation of the shape classifier image processing algorithm occurs before the determination of the distance and spatial relationship for the at least one pixel value. In other words, a shape detection and shape classifier processing step is provided before image features are further processed to determine if a particular type of sign is present. In an example, only images that contain shapes that are consistent with road signs and/or the particular type of road signs are further processed by the processing unit to determine the distance and spatial relationship of pixel values. In this manner, computational efficiency is provided, because only suitable imagery, that could indicate the presence of a particular type of sign, is processed.

The shape classification image processing algorithm is configured to analyse the at least one image to determine if a shape corresponding to the shape of the particular type of road sign is present.

The determination if a particular sign is present comprises a determination of an intensity level of a luminance spread within a region of interest associated with the shape corresponding to the shape of the particular type of road sign.

According to an example, dependent upon a result of the shape classification image processing algorithm the at least one image can be added to the plurality of images.

In an example, only images that have been determined to contain image data consistent with a road sign, and/or the particular type of road sign, being present are added to the plurality of images to augment the dictionary information.

At least some of the image data of the plurality of images is image data associated with at least one light source.

According to an example, generation of the dictionary information comprises utilisation of a Gray Level Co-Occurrence Matrix.

According to an example, generation of the dictionary information comprises utilisation of a decision tree classifier.

According to an example, the particular type of sign comprises a stop sign or a no entry sign.

Fig. 2 shows an example of a vehicle 100 configured to determine the presence of a road sign. The vehicle 100 comprises at least one data acquisition unit 110, and a device 10 for determining the presence of a road sign as described with reference to Fig. 1. The vehicle 100 also comprises at least one vehicle operational system 120. The at least one image acquisition unit 110 comprises a camera 112 configured to acquire the at least one image. The device 10 is configured to cooperate with the at least one vehicle operational system 120 to control the at least one vehicular operational system.

In an example, the at least one image acquisition unit is configured to acquire the plurality of images.

In an example, the camera is configured to acquire the plurality of images.

In an example, the at least one vehicle operational system comprises an audio unit of the car. In this manner, a driver can be provided with an audible warning if a stop sign or no entry sign has been detected.

In an example, the at least one vehicle operational system comprises a visual display unit of the car. In this manner, a driver can be provided with a visual warning if a stop sign has been detected.

In an example, the at least one vehicle operational system comprises a braking system of the car. In this manner, a car can be automatically decelerated or brought to a stop if a stop sign (or no entry sign) has been detected, and the driver has not responded.

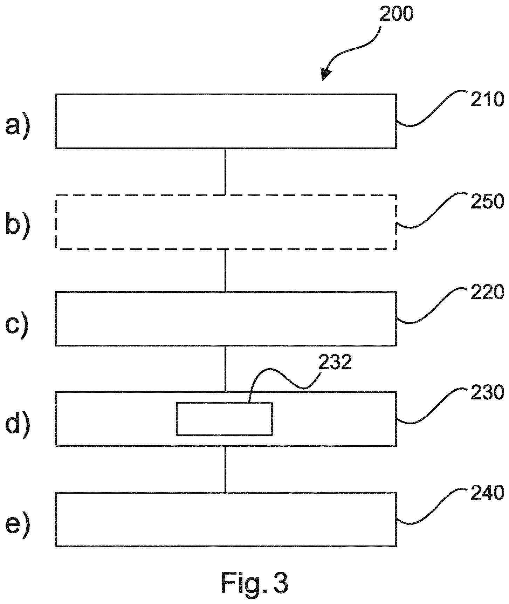

Fig. 3 shows a method 200 for determining the presence of a road sign in its basic steps. The method 200 comprises:

in a providing step 210, also referred to as step a), providing at least one image, the at least one image relating to a scene external to a vehicle;

in a providing step 220, also referred to as step c), providing dictionary information, wherein the dictionary information is generated on the basis of a plurality of images, and wherein at least some of the image data of the plurality of images is image data associated with at least one road sign;

in a determining step 230, also referred to as step d), determining if a particular type of road sign is present in the at least one image on the basis of image processing of the at least one image and the dictionary information; wherein, the image processing comprises: a determining step 232, also referred to as step d1), involving determining a distance and spatial relationship for at least one pixel value in the at least one image; and

in an outputting step 240, also referred to as step e), outputting driving warning information if the particular type of road sign is determined to be present.

Step a) comprises providing the at least one image from an input unit to a processing unit.

Step c) comprises providing the dictionary information from the input unit to the processing unit.

In step d) the processing is carried out by the processing unit.

In step e) the outputting is carried out by an output unit.

In an example, the method comprises step b), generating 250 the dictionary information on the basis of the plurality of images. In other words, already provided dictionary information can be utilised, that was acquired offline, or the method can generate the dictionary information.

Step d1) comprises utilising a Gray Level Co-Occurrence Matrix.

Step d) comprises utilising a decision tree classifier.

Step d) comprises utilising a shape classification image processing algorithm.

Utilising the shape classification image processing algorithm comprises analysing the at least one image to determine if a shape corresponding to the shape of the particular type of road sign is present.

Step d) comprises determining an intensity level of a luminance spread within a region of interest associated with the shape corresponding to the shape of the particular type of road sign.

In an example, the method comprises adding, dependent upon a result of the shape classification image processing algorithm, the at least one image to the plurality of images.

At least some of the image data of the plurality of images is image data associated with at least one light source.

In an example, step b) comprises utilising a Gray Level Co-Occurrence Matrix.

In an example, step b) comprises utilising a decision tree classifier.

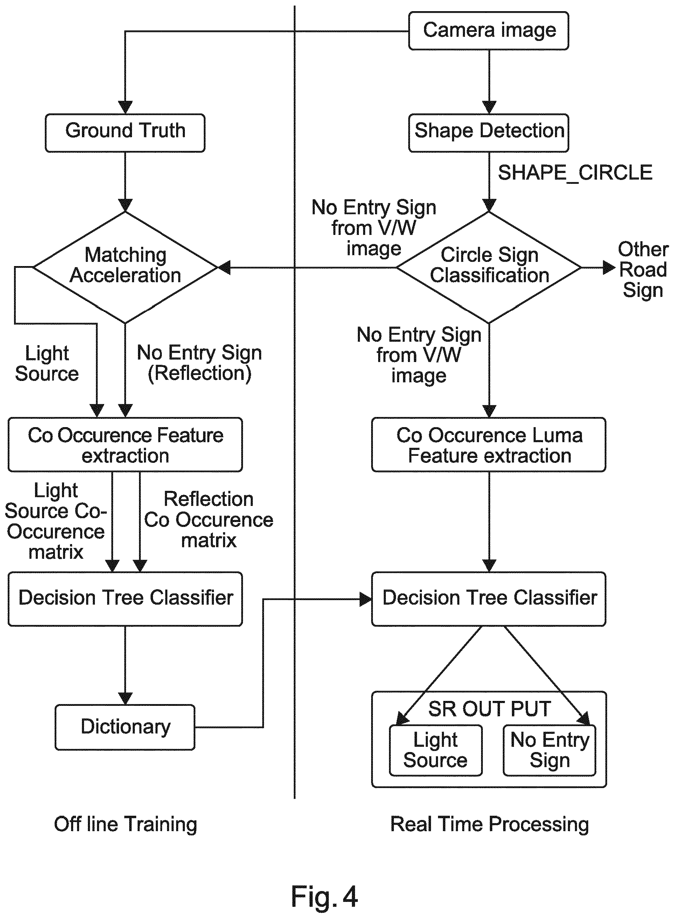

The device, system and method are now described in further detail with respect to Fig. 4.

Fig. 4 shows a detailed work flow for determining the presence of a road sign, and reduces false positives relating to determining the presence of a sign such as a stop sign, or no entry sign.

Referring to Fig. 4, one or more cameras acquires images of a scene outside a vehicle, as would normally be acquired by a camera forming part of an advanced driver assist system (ADAS). The imagery can be acquired by such a camera, but can also be acquired by other cameras that need not to be associated with the vehicle, for example handheld cameras that form part of library imagery. The camera imagery contains object information such as a road scene, including different road signs, different lighting scenes and sources, road signs being illuminated by light sources such that light is being reflected from them, and road signs that are not being illuminated. The camera imagery contains imagery of streetlights, the headlights and taillights of cars, the sun in different parts of the imagery, and various other possible light sources in different parts of the imagery.

With continued reference to Fig.4 camera imagery also relates to real-time imagery acquired by an on-board vehicle camera, which is used by the device, system and method to determine the presence of a road sign, and classify that road sign such as identifying a road sign is present and that that road sign is a no entry sign (or stop sign). Appropriate warning information can then be provided to the driver.

Before the device, system and method is run in real-time on a vehicle, utilising the workflow as shown in Fig. 4, the device, system and method is trained using the above described camera imagery. In such off-line training, camera imagery is divided into one third evaluation data and two thirds development data. This is just one example, and different ratios of evaluation to development data can be utilised. Indeed, the evaluation data is used to determine the efficacy of the device, system and method once training has been undertaken using the development data and need not actually be used. Therefore, referring to the detailed workflow Fig. 4 the left hand side of the figure, along with the shape detection and circle sign classification steps shown at the top on the right-hand side of the figure, shows how camera imagery is used to provide a dictionary storing decision information about active light sources and different road signs. The right hand side of Fig. 4 then can be considered to be the real-time utilisation of the device, system and method for example in a vehicle. Here, real-time acquired imagery is used with the same dictionary that was developed during training during real-time processing to determine the presence of a road sign and classify it, for example determining that the scene ahead contains a stop sign (or no entry sign). This enables, for example the differentiation of light reflected from road signs with light sources themselves, reducing false positive identification of light sources as road signs.

Continuing with the off-line training phase, as shown in Fig. 4 and as referred to above, from the development data training samples are generated based on the ground truth information (such as exactly what is visible in the camera imagery, as determined for example by a technician) along with overlapping ratio. Therefore, the detection and classification system running off-line on the development data set is provided with recognition information for road signs such as no entry signs that have light reflected from them and is provided with recognition information for light sources. Such light sources can be falsely recognized as road sign, such as a no entry sign, in existing systems. In other words, the development data has been pipelined using ground truth data for feature extraction and classifier training to make the dictionary. That same dictionary is then used during real-time processing to determine the presence, and classification of, road signs, enabling the differentiation for example between a road sign suffering from light reflected from its surface and a light source itself such as a street lamp.

As shown in Fig. 4 in both the off-line training and an online real time processing, shape detection and circle sign classification is implemented, which as discussed above is utilised with ground truth for off-line training. A circular sign is detailed here as an example, but other signs such as square, rhomboid, or other shaped road signs can also be detected and classified. The camera imagery is processed with image processing algorithms to detect a circular shape, or substantially circular shape indicative of a circular road sign viewed from an angle, and the image data within the boundary of that circular shape is captured. A circle sign classification step utilises a principle component analysis (PCA) classifier to determine if a feature in the camera imagery is consistent with being a road sign, such as no entry sign. As part of this process the input image is acquired by the camera is converted into the well-known "Y" and "V" images, and processing considering these 2 image planes (Y/V) proceeds. Thus PCA features are used along with a polynomial classifier for circle sign classification. However, at this stage the road sign suffering from reflected light from the surface can be similar to imagery of a light source. Therefore, in order to ensure that a road sign suffering from light reflection is detected and classified, at this stage such image data along with image data that does not have a road sign but that is just light source is passed onwards to the co-occurrence luma feature extraction step. This step forms both part of the off-line training. In real time the image passed can have a road sign or a light source or both. It can be processed independently to obtain the result (the other image pair not required since the dictionary already has trained data). In the co-occurrence luma feature extraction step, a grey level co-occurrence matrix (GLCM) in effect checks the saturation level of the luminance spread within the detected a region of interest of what could be a road sign. Thus, one can consider that a circular region of interest was detected at the circle sign classification step, and that image region is now being processed by the GLCM. To recall, the output of the circle sign classification step is a region of interest that could contain a road sign, such as a stop sign (or no entry sign). In the GLCM processing that region of interest is cut into 9 blocks, for example a square image region can be cut into 9 sections with 2 vertical cuts and 2 horizontal cuts, where the region of interest could be square, circular, elliptical or any other shape. Cutting of the region of interest 9 blocks is one example, in the region known interest could be cut into any number of blocks. Images are quantised into 8 levels, such that 8-bit images (0-255) are being dealt with. As discussed above a "sign" cut out is divided into 9 blocks, and for each block pixels are considered pairwise and the co-occurrence matrix is formed for each pair. A comparative result can then be determined based on that the co-occurrence matrix value can be incremented.

The Y and V images are discussed above, and are determined in the well done way as shown below:

$$Y' = W_R R + W_G G + W_B B = 0.299R + 0.587G + 0.114B$$

$$U = U_{\text{Max}} \frac{B - Y'}{1 - W_B} \approx 0.492(B - Y')$$

$$V = V_{\text{Max}} \frac{R - Y'}{1 - W_D} \approx 0.877(R - Y')$$

With continued reference to Fig. 4, the output of the co-occurrence Luma feature extraction step, implemented via a GLCM as discussed above, is passed to a decision tree classifier. The classify decision making starts marooned level and stops at point with the confidence value is good enough to make a conclusion. As discussed above a single cutout is divided into 9 blocks the feature extraction and calculating the GLCM. Considering the 2 planes (Y/V images) there are a total of 9 * 64 * 12 offset * 2 = 13824 features. Here, the 9 refers to the number of blocks of the cutout, 64 = 8*8, and the offset example of 12 relates to the offset at which the distribution of co-occurring pixel values is determined within the GLCM, and 2 relates to the two images, Y and V. The offset rather than being 12 in the above example, could be any value from 2 to 31, and the block size rather than being 9 could be any value 2 to 24. Thus, there are a number of feature sets upon which decision can be made as to whether an image contains a road sign, such as a stop sign (or no entry sign) that may be suffering from light being reflected from a surface, or whether that image just contains light source such as a street lamp. The decision tree classifier can be used to minimise the computational complexity, because for example if the classify decision of the first feature set itself is giving enough confidence to make a decision (differentiating a light source from a road sign that could have light reflecting from its surface) then further features do not need to be evaluated. In this manner, a conclusion can be reached as to whether the image and more particularly the region of interest within the image is a road sign or a light source using less than all the features. For example 20% of the features can be analysed. Thus, computational time feel evaluating the complete feature set is saved.

The above process, is used along with ground truth information in providing the dictionary information during off-line training. The above process is then used in real-time, within for example an ADAS system on a vehicle that is processing acquired imagery in real-time, and making use of the dictionary information determined during the off-line training to determine the presence of a road sign in imagery, and indeed without road sign is a particular type of road signs such as a stop sign or no entry sign.

The co-occurrence Luma feature extraction step shown on the left and right hand signs of Fig. 4, implemented by a GLCM that has the same functionality. Referring to the GLCM I shown on the left hand side used during off-line training, to recall camera imagery is provided with associated ground truth as to what is being shown in that imagery. The GLCM then creates a feature descriptor. When the cutout data of the region of interest is known to come from a light source, and a class label -1 is provided associated with imagery. When the cutout data of the region of interest is known to come from for example a no entry sign board cutout data, a class label of +1 is provided associated with imagery. This is indicated by the 2 arrows in Fig. 4 that extend from the co-occurrence Luma feature extraction box to the decision tree classifier box, and is utilised when making the dictionary information. Thus, image data having class labels is provided for the dictionary information, which is derived from ground truth and the matching accelerator which is being fed with information from shape detection and circle sign classification steps.

The following provides further detail on elements utilized in determining the presence of a road sign, and distinguishing between a road sign and a light source.

**Circle Detector**

The Circle detector has 2 main parts - Course Detector and Detection Verification

**1. Course Detector**

The primary detection of the circles in the images is performed on an image sub-scaled by the factor of two. The following steps are performed in course detection stage.

**Edge Detection:** For Edge detection a well known Sobel filter is used in this system since it provides good performance in speed as well as detection rate. To ease the computational cost in later steps of the algorithm and to better define the position of the edges a non-maximum suppression scheme is used.

**Hough Accumulator:** The main detection step is established by the use of the fast generalized Hough Transform. To reduce memory consumption and computation time the radius range and centre positions to be scanned is quantized

**Low pass filter on Accumulator and Maximum Extraction:** In this step the highest entries of the accumulator image are extracted and entered into a list structure. A low pass filter is used on the accumulator images and a fixed number of maxima extracted and passed on to the next step. The list of points is submitted to a connected components search. The weighted centre of the connected components comprises the candidates handed on to the detection verification stage.

## 2. Detection Verification:

The circle candidates detected in the previous steps are quantized to two pixels accuracy in position and to a limited number of radius range segments in size. For later tracking and classification the circles have to be measured more accurately. As an additional effect this step verifies the circle candidates. Since through the rough estimation in the coarse detector phantom candidates are created, especially in areas containing many edges, tree branches or bushes for example. These phantom candidates are eliminated in this step. Chamfer matching algorithm is used for this process. The algorithm is based on a distance transform in which the value of each pixel in the transformed image represents the distance to the closest pixel set in the binary input image, in this case the edge image. The output is the sum of accumulated values under a mask applied to the distance transformed image, the so-called Chamfer image.

## Sign Tracker:

The tracker is the central component in the system. It is used to collect the traffic sign candidates in the image sequence from the detector, accumulate the detected circles over time and position and hand the tracks over to the classification system, administrating the classification results as well. The type of tracker used is an $\alpha\beta\gamma$ tracker.

## Classifier:

Prior to classification, a Normalization process is performed on the image cutout to remove as many systematic differences (like their size, brightness, and grade of blurring) as possible between the patterns to be recognized.

The exemplar classifier implemented is a two stage hierarchical classifier. The first stage is used to reject the main part of the patterns not representing a sign and has the second function of determining the type of the sign. For the classification of one stage in the hierarchy the number of features resented to the classifier has to be reduced, and in this example this is done using the principal component analysis (PCA). The dimensionality of the classification problem is reduced to allow an efficient training of the classifier. For the classification process, polynomial classifier of second degree is being used due to its good classification performance, computational speed and ease of retraining.

## Track Classification:

The last step in the classification process is the combination of the single pattern classification results to a conclusion for the whole track, meaning to conclude from a sequence of image objects which class the corresponding real world object belongs to. The accumulated result is the weighted sum of these probabilities, the decision being made by the maximum relative probability. The relative probability has to be above a threshold, otherwise the classification is rejected and set to the result class "Garbage". An additional rejection step has been introduced by thresholding the sum of single probabilities for the resulting class. This addresses the issue thatz since the relative probability compared to the other classes may be high, but the absolute sum might still be low when the track was short or many of the entries could not be identified due to the being rejected by the single pattern classification system.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining the presence of a road sign, comprising:

    - an input unit (20);
    - a processing unit (30); and
    - an output unit (40);

    wherein, the input unit is configured to provide the processing unit with at least one image, the at least one image relating to a scene external to a vehicle, and wherein at least some of the image data of the at least one image is image data associated with at least one light source;

    wherein, the input unit is configured to provide the processing unit with dictionary information, wherein the dictionary information is generated on the basis of a plurality of images, and wherein at least some of the image data of the plurality of images is image data associated with at least one road sign;

    wherein, the processing unit is configured to determine if a particular type of road sign is present in the at least one image on the basis of image processing of the at least one image and the dictionary information, comprising utilisation of shape classification image processing algorithm, wherein the shape classification image processing algorithm is configured to analyse the at least one image to determine if a shape corresponding to the shape of the particular type of road sign is present, and wherein the image processing comprises a determination of a luminance spread within a region of interest in one or more images of the at least one image associated with the shape corresponding to the shape of the particular type of road sign;

    wherein, the image processing comprises a determination of a distance and spatial relationship for a plurality of pixel values in the region of interest in the one or more images of the at least one image to determine the occurrence of different combinations of pixel brightness values in the region of interest in the one or more images, wherein determination of the distance and spatial relationship for the plurality of pixel values in the region of interest in the one or more images comprises utilisation of a Gray Level Co-Occurrence Matrix to process the luminance spread within the region of interest in the one or more images, and wherein the determination if a particular sign is present comprises utilisation of a decision tree classifier output from the Gray-Level Co-Occurrence Matrix;

    wherein, utilisation of the shape classifier image processing algorithm occurs before the determination of the distance and spatial relationship for the plurality of pixel values; and

    wherein, the output unit is configured to output driving warning information if the particular type of road sign is determined to be present.

2. Device according to claim 1, wherein dependent upon a result of the shape classification image processing algorithm the at least one image can be added to the plurality of images.

3. Device according to any of claims 1-2, wherein generation of the dictionary information comprises utilisation of a Gray Level Co-Occurrence Matrix.

4. Device according to any of claims 1-3, wherein generation of the dictionary information comprises utilisation of a decision tree classifier.

5. Device according to any of claims 1-4, wherein the particular type of sign comprises a stop sign.

6. A vehicle (100) configured to determine the presence of a road sign, comprising:

    - at least one data acquisition unit (110); and
    - a device (10) configured to determine the presence of a road sign according to any one of the preceding claims; and

- at least one vehicle operational system (120); wherein, the at least one image acquisition unit comprises a camera (112) configured to acquire at least one image, the at least one image being an image of a road scene; and wherein, the device is configured to cooperate with the at least one vehicle operational system to control the at least one vehicular operational system.

**7.** A method (200) for determining the presence of a road sign, comprising:

a) providing (210) at least one image, the at least one image relating to a scene external to a vehicle, and wherein at least some of the image data of the at least one image is image data associated with at least one light source;

c) providing (220) dictionary information, wherein the dictionary information is generated on the basis of a plurality of images, and wherein at least some of the image data of the plurality of images is image data associated with at least one road sign;

d) determining (230) if a particular type of road sign is present in the at least one image on the basis of image processing of the at least one image and the dictionary information; wherein, the image processing comprises utilisation of shape classification image processing algorithm, wherein the shape classification image processing algorithm is configured to analyse the at least one image to determine if a shape corresponding to the shape of the particular type of road sign is present, and wherein the image processing comprises a determination of a luminance spread within a region of interest in one or more images of the at least one image associated with the shape corresponding to the shape of the particular type of road sign:

d1) after determining if a particular type of road sign is present in the at least one image, determining (232) a distance and spatial relationship for a plurality of pixel value in the region of interest in the one or more images of the at least one image to determine the occurrence of different combinations of pixel brightness values in region of interest in the one or more images , wherein determination of the distance and spatial relationship for the plurality of pixel values in the region of interest in the one or more images comprises utilisation of a Gray Level Co-Occurrence Matrix to process the luminance spread within the region of interest in the one or more images, and wherein the determination if a particular sign is present comprises utilisation of a decision tree classifier output from the Gray-Level Co-Occurrence Matrix; and

e) outputting (240) driving warning information if the particular type of road sign is determined to be present.

**8.** A computer program element for controlling a device according to any one of claims 1 to 6, comprising instructions which, when the program is executed by a computer, cause the computer to carry out the method of claim 7.

**Patentansprüche**

**1.** Vorrichtung (10) zum Bestimmen des Vorhandenseins eines Straßenschilds, die Folgendes aufweist:

- eine Eingabeeinheit (20);
- eine Verarbeitungseinheit (30) und
- eine Ausgabeeinheit (40); wobei

die Eingabeeinheit ausgebildet ist, der Verarbeitungseinheit mindestens ein Bild bereitzustellen, wobei das mindestens eine Bild sich auf eine Szene außerhalb eines Fahrzeugs bezieht und mindestens einige der Bilddaten des mindestens einen Bilds Bilddaten sind, die mindestens einer Lichtquelle zugeordnet sind; die Eingabeeinheit ausgebildet ist, der Verarbeitungseinheit Verzeichnisinformationen bereitzustellen, wobei die Verzeichnisinformationen auf der Grundlage mehrerer Bilder erzeugt werden und mindestens einige der Bilddaten der mehreren Bilder Bilddaten sind, die mindestens einem Straßenschild zugeordnet sind; die Verarbeitungseinheit ausgebildet ist, auf der Grundlage einer Bildverarbeitung des mindestens einen Bilds und der Verzeichnisinformationen, was die Nutzung eines Formklassifizierungs-Bildverarbeitungsalgorithmus aufweist, zu bestimmen, ob ein bestimmter Straßenschildtyp im mindestens einen Bild vorhanden ist, wobei der Formklassifizierungs-Bildverarbeitungsalgorithmus ausgebildet ist, das mindestens eine Bild zu analysieren, um zu bestimmen, ob eine Form, die der Form des bestimmten Typs eines Straßenschilds entspricht, vorhanden ist, und die Bildverarbeitung eine Bestimmung einer Leuchtdichteausbreitung in einem Bereich von Interesse in einem oder mehreren Bildern des mindestens einen Bilds, das der Form, die der Form des bestimmten Typs eines Straßenschilds entspricht, zugeordnet ist, aufweist; die Bildverarbeitung eine Bestimmung einer Entfernung und einer räumlichen Beziehung für mehrere Pixelwerte im Bereich von Interesse in dem einen oder den mehreren Bildern des mindestens einen Bilds aufweist, um das Auftreten verschiedener Kombinationen von Pixelhelligkeitswerten im Bereich von Interesse in dem einen oder den mehreren Bildern zu bestimmen, wobei die Bestimmung der Entfernung und der räumlichen Beziehung für die mehreren Pixelwerte im Bereich von Interesse in dem einen oder den mehreren Bildern die Nutzung einer Graustufen-"Co-Occurence"-Matrix aufweist, um die Leuchtdichteausbreitung im Bereich von Interesse in dem einen oder den mehreren Bildern zu verarbeiten, und die Bestimmung, ob ein bestimmtes Zeichen vorhanden ist, die Nutzung eines Entscheidungsbaumklassifikators, der aus der Graustufen-"Co-Occurence"-Matrix ausgegeben wird, aufweist;

die Nutzung des Formklassifikator-Bildverarbeitungsalgorithmus vor der Bestimmung der Entfernung und der räumlichen Beziehung für die mehreren Pixelwerte auftritt und

die Ausgabeeinheit ausgebildet ist, Fahrwarnungsinformationen auszugeben, wenn bestimmt wird, dass der bestimmte Straßenschildtyp vorhanden ist.

2. Vorrichtung nach Anspruch 1, wobei abhängig von einem Ergebnis des Formklassifizierungs-Bildverarbeitungsalgorithmus das mindestens eine Bild zu den mehreren Bildern hinzugefügt werden kann.

3. Vorrichtung nach einem der Ansprüche 1-2, wobei die Erzeugung der Verzeichnisinformationen eine Nutzung einer Graustufen-"Co-Occurence"-Matrix aufweist.

4. Vorrichtung nach einem der Ansprüche 1-3, wobei die Erzeugung der Verzeichnisinformationen eine Nutzung eines Entscheidungsbaumklassifikators aufweist.

5. Vorrichtung nach einem der Ansprüche 1-4, wobei der bestimmte Typ eines Zeichens ein Stoppschild umfasst.

6. Fahrzeug (100), das ausgebildet ist, das Vorhandensein eines Straßenschilds zu bestimmen, und das Folgendes aufweist:

- mindestens eine Datenerfassungseinheit (110);
- eine Vorrichtung (10), die ausgebildet ist, das Vorhandensein eines Straßenschilds zu bestimmen, nach einem der vorhergehenden Ansprüche und
- mindestens ein Fahrzeugbetriebssystem (120); wobei

die mindestens eine Bilderfassungseinheit eine Kamera (112) aufweist, die ausgebildet ist, mindestens ein Bild zu erfassen, wobei das mindestens eine Bild ein Bild einer Straßenszene ist; und
die Vorrichtung ausgebildet ist, mit dem mindestens einen Fahrzeugbetriebssystem zusammenzuwirken, um das mindestens eine Fahrzeugbetriebssystem zu steuern.

7. Verfahren (200) zum Bestimmen des Vorhandenseins eines Straßenschilds, das Folgendes aufweist:

a) Bereitstellen (210) mindestens eines Bilds, wobei das mindestens eine Bild sich auf eine Szene außerhalb eines Fahrzeugs bezieht und mindestens einige der Bilddaten des mindestens einen Bilds Bilddaten sind, die mindestens einer Lichtquelle zugeordnet sind;
c) Bereitstellen (220) von Verzeichnisinformationen, wobei die Verzeichnisinformationen auf der Grundlage mehrerer Bilder erzeugt werden und mindestens einige der Bilddaten der mehreren Bilder Bilddaten sind, die mindestens einem Straßenschild zugeordnet sind;
d) Bestimmen (230), ob ein bestimmter Straßenschildtyp in dem mindestens einen Bild vorhanden ist, auf der Grundlage einer Bildverarbeitung des mindestens einen Bilds und der Verzeichnisinformationen; wobei die Bildverarbeitung eine Nutzung eines Formklassifizierungs-Bildverarbeitungsalgorithmus aufweist, der Formklassifizierungs-Bildverarbeitungsalgorithmus ausgebildet ist, das mindestens eine Bild zu analysieren, um zu bestimmen, ob eine Form, die der Form des bestimmten Typs eines Straßenschilds entspricht, vorhanden ist, und die Bildverarbeitung eine Bestimmung einer Leuchtdichteausbreitung in einem Bereich von Interesse in einem oder mehreren Bildern des mindestens einen Bilds, das der Form, die der Form des bestimmten Typs eines Straßenschilds entspricht, zugeordnet ist, aufweist;
d1) nach dem Bestimmen, ob ein bestimmter Straßenschildtyp im mindestens einen Bild vorhanden ist, Bestimmen (232) einer Entfernung und einer räumlichen Beziehung für mehrere Pixelwerte im Bereich von Interesse in dem einen oder den mehreren Bildern des mindestens einen Bilds, um das Auftreten verschiedener Kombinationen von Pixelhelligkeitswerten im Bereich von Interesse in dem einen oder den mehreren Bildern zu bestimmen, wobei die Bestimmung der Entfernung und der räumlichen Beziehung für die mehreren Pixelwerte im Bereich von Interesse in dem einen oder den mehreren Bildern die Nutzung einer Graustufen"-Co-Occurence"-Matrix aufweist, um die Leuchtdichteausbreitung im Bereich von Interesse in dem einen oder den mehreren Bildern zu verarbeiten, und die Bestimmung, ob ein bestimmtes Zeichen vorhanden ist, die Nutzung eines Entscheidungsbaumklassifikators, der aus der Graustufen"-Co-Occurence"-Matrix ausgegeben wird, aufweist; und

e) Ausgeben (240) von Fahrwarnungsinformationen, wenn bestimmt wird, dass der bestimmte Straßenschildtyp vorhanden ist.

**8.** Computerprogrammelement zum Steuern einer Vorrichtung nach einem der Ansprüche 1 bis 6, das Befehle enthält, die, wenn das Programm durch einen Computer ausgeführt wird, den Computer veranlassen, das Verfahren nach Anspruch 7 auszuführen.

**Revendications**

**1.** Dispositif (10) de détermination de la présence d'un panneau de signalisation, comprenant :

- une unité d'entrée (20) ;
- une unité de traitement (30) ; et
- une unité de sortie (40) ;

dans lequel l'unité d'entrée est configurée pour fournir à l'unité de traitement au moins une image, l'au moins une image se rapportant à une scène extérieure à un véhicule, et dans lequel au moins une partie des données d'image de l'au moins une image est constituée par des données d'image associées à au moins une source lumineuse ;

dans lequel l'unité d'entrée est configurée pour fournir à l'unité de traitement des informations de dictionnaire, les informations du dictionnaire étant générées sur la base d'une pluralité d'images et dans lequel au moins une partie des données d'image de la pluralité d'images est constituée par des données d'image associées à au moins un panneau de signalisation ;

dans lequel l'unité de traitement est configurée pour déterminer qu'un type particulier de panneau de signalisation est présent ou non dans l'au moins une image en fonction du traitement d'image de l'au moins une image et des informations de dictionnaire, comprenant l'utilisation d'un algorithme de traitement d'image de classification de forme, dans lequel l'algorithme de traitement d'image de classification de forme est configuré pour analyser l'au moins une image afin de déterminer qu'une forme correspondant à la forme du type particulier de panneau de signalisation est présente ou non et dans lequel le traitement d'image comprend une détermination d'une répartition de luminance dans une région d'intérêt dans une ou plusieurs images de l'au moins une image associée à la forme correspondant à la forme du type particulier de panneau de signalisation ;

dans lequel le traitement d'image comprend la détermination d'une distance et d'une relation spatiale pour une pluralité de valeurs de pixels dans la région d'intérêt dans les une ou plusieurs images de l'au moins une image afin de déterminer l'occurrence de différentes combinaisons de valeurs de luminosité de pixels dans la région d'intérêt dans les une ou plusieurs images, dans lequel la détermination de la distance et de la relation spatiale pour la pluralité de valeurs de pixels dans la région d'intérêt dans les une ou plusieurs images comprend l'utilisation d'une matrice de cooccurrence de niveaux de gris pour traiter la répartition de luminance dans la région d'intérêt dans les une ou plusieurs images, et dans lequel la détermination qu'un panneau particulier est présent comprend l'utilisation d'une sortie de classificateur à arbre de décision à partir de la matrice de cooccurrence de niveaux de gris ;

dans lequel l'utilisation de l'algorithme de traitement d'image de classificateur de forme a lieu avant la détermination de la distance et de la relation spatiale pour la pluralité de valeurs de pixels ; et

dans lequel l'unité de sortie est configurée pour délivrer des informations d'avertissement de conduite s'il est déterminé que le type particulier de panneau de signalisation est présent.

**2.** Dispositif selon la revendication 1, dans lequel, en fonction d'un résultat de l'algorithme de traitement d'image de classification de forme, l'au moins une image peut être ajoutée à la pluralité d'images.

**3.** Dispositif selon l'une quelconque des revendications 1 à 2, dans lequel la génération des informations de dictionnaire comprend l'utilisation d'une matrice de cooccurrence de niveaux de gris.

**4.** Dispositif selon l'une quelconque des revendications 1 à 3, dans lequel la génération des informations de dictionnaire comprend l'utilisation d'un classificateur à arbre de décision.

5. Dispositif selon l'une quelconque des revendications 1 à 4, dans lequel le type particulier de signal comprend un panneau de stop.

6. Véhicule (100) configuré pour déterminer la présence d'un panneau de signalisation, comprenant :

- au moins une unité d'acquisition de données (110) ; et
- un dispositif (10) configuré pour déterminer la présence d'un panneau de signalisation selon l'une quelconque des revendications précédentes ; et
- au moins un système opérationnel de véhicule (120) ;

dans lequel l'au moins une unité d'acquisition d'images comprend une caméra (112) configurée pour acquérir au moins une image, l'au moins une image étant une image d'une scène routière ; et
dans lequel le dispositif est configuré pour coopérer avec l'au moins un système opérationnel du véhicule pour commander l'au moins un système opérationnel de véhicule.

7. Procédé (200) de détermination de la présence d'un panneau de signalisation, comprenant :

a) la fourniture (210) d'au moins une image, l'au moins une image se rapportant à une scène extérieure à un véhicule, et dans lequel au moins une partie des données d'image de l'au moins une image sont des données d'image associées à au moins une source lumineuse ;
c) la fourniture (220) d'informations de dictionnaire, les informations de dictionnaire étant générées sur la base d'une pluralité d'images et dans lequel au moins une partie des données d'image de la pluralité d'images est constituée par des données d'image associées à au moins un panneau de signalisation;
d) la détermination (230) qu'un type particulier de panneau de signalisation est présent ou non dans l'au moins une image sur la base du traitement d'image de l'au moins une image et des informations du dictionnaire ; dans lequel le traitement d'image comprend l'utilisation d'un algorithme de traitement d'image de classification de forme, dans lequel l'algorithme de traitement d'image de classification de forme est configuré pour analyser l'au moins une image afin de déterminer qu'une forme correspondant à la forme du type particulier de panneau de signalisation est présente ou non, et dans lequel le traitement d'image comprend la détermination d'une répartition de luminance dans une région d'intérêt dans une ou plusieurs images de l'au moins une image associée avec la forme correspondant à la forme du type du type particulier de panneau de signalisation :
d1) après la détermination qu'un type particulier de panneau de signalisation est présent ou non dans l'au moins une image, la détermination (232) d'une distance et d'une relation spatiale pour une pluralité de valeurs de pixels dans la région d'intérêt dans les une ou plusieurs images de l'au moins une image afin de déterminer l'occurrence de différentes combinaisons de valeurs de luminosité de pixels dans la région d'intérêt dans les une ou plusieurs images, dans lequel la détermination de la distance et de la relation spatiale pour la pluralité de valeurs de pixels dans la région d'intérêt dans les une ou plusieurs images comprend l'utilisation d'une matrice de cooccurrence de niveaux de gris pour traiter la répartition de luminance dans la région d'intérêt dans les une ou plusieurs images, et dans lequel la détermination qu'un panneau particulier est présent ou non comprend l'utilisation d'une sortie de classificateur à arbre de décision de la matrice de cooccurrence de niveaux de gris ; et
e) la délivrance (240) d'informations d'avertissement de conduite s'il est déterminé que le type particulier de panneau de signalisation est présent.

8. Elément de programme d'ordinateur pour commander un dispositif selon l'une quelconque des revendications 1 à 6, comprenant des instructions qui, à l'exécution du programme par un ordinateur, amènent l'ordinateur à entreprendre le procédé selon la revendication 7.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2573711 A2

**Non-patent literature cited in the description**

- **MUSTAIN BILLAH et al.** Real Time Traffic Sign Detection and Recognition using Adaptive Neuro Fuzzy Inference System. *Communications on Applied Electronics,* 23 October 2015, 1-5